# EUROPÄISCHE PATENTANMELDUNG

(11) **EP 2 727 675 A1**
(43) Veröffentlichungstag der Anmeldung: **07.05.2014**
(21) Anmeldenummer: 13005482.8
(22) Anmeldetag: 31.10.2013
(51) Int. Cl.: B23D 61/02, B28D 1/12

(54) **Schneidring zur Bildung eines Kreissägeblattes und Kreissägeblatt**

(30) Priorität: 02.11.2012 DE 102012021360
(71) Anmelder: Wilhelm Koken GmbH Diamantwerkzeugfabrikation, 88167 Röthenbach (DE)
(72) Erfinder: Baumann, Bruno, 88285 Bodnegg (DE)
(74) Vertreter: Otten, Roth, Dobler & Partner

(57) **Zusammenfassung**

Die Erfindung betrifft einen Schneidring (1) zur Bildung eines Kreissägeblattes (3) zusammen mit einem Stammblatt (2), insbesondere Kreissägeblattschneidring, welcher mehrere Trägerelemente (24, 41) und eine Vielzahl von Schneidelementen (42) umfasst, wobei jedes Trägerelement (24, 41) jeweils mehrere der Schneidelemente (42) trägt. Hierbei ist jedes Trägerelement (24, 41) mit seinem benachbarten Trägerelement (24, 41) derart verbunden ist, dass sich die benachbarten Trägerelemente (24, 41) bei hohen Schnittgeschwindigkeiten fliehkraftgesteuert gegenseitig stabilisieren. (Figur 5)

## Beschreibung

Die Erfindung betrifft einen Schneidring zur Bildung eines Kreissägeblattes und ein Kreissägeblatt gemäß dem Oberbegriff des Anspruchs 1 bzw. 7.

Aus der DE 93 03 141 U1 ist ein Schneidring zw. ein Kreissägeblatt bekannt, wobei der Schneidring zusammen mit einem Stammblatt ein Kreissägeblatt bildet, wobei der Schneidring bzw. das Kreissägeblatt mehrere Trägerelemente und eine Vielzahl von Schneidelementen umfassen und wobei jedes Trägerelement jeweils mehrere der Schneidelemente trägt. Derartige Schneidringe bzw. derartige Kreissägeblätter neigen bei großen Durchmessern mit zunehmender Schnittgeschwindigkeit bedingt durch eine Durchmesservergrößerung zu zunehmend unruhigem Lauf und somit zur Erzeugung unsauberer Schnitte. Darüber hinaus ist die Schnittbreite und der damit einhergehende Materialverlust durch die Materialstärke des Stammblattes bestimmt, da dieses den statischen Anforderungen, wie beispielsweise Steifheit und Widerstand gegen die Fliehkraft, an das Kreissägeblatt im Betrieb genügen muss.

Es ist Aufgabe der Erfindung, einen Schneidring zur Bildung eines Kreissägeblattes bzw. ein Kreissägeblatt vorzuschlagen, welcher bzw. welches auch bei material- und/oder schnittgeschwindigkeitsbedingten Durchmesserzunahmen einen ruhigen Lauf aufweist, wenig Materialverlust produziert und saubere Schnitte erzeugt.

Diese Aufgabe wird ausgehend von den Merkmalen des Oberbegriffs des Anspruchs 1 bzw. 7 durch die kennzeichnenden Merkmale des Anspruchs 1 bzw. 7 gelöst. In den jeweiligen Unteransprüchen sind vorteilhafte und zweckmäßige Weiterbildungen angegeben.

Die Erfindung sieht bei dem Schneidring, welcher zusammen mit einem Stammblatt ein Kreissägeblatt bildet, eine Verbindung zwischen benachbarten Trägerelementen vor, durch welche die benachbarten Trägerelemente sich bei hohen Schnittgeschwindigkeiten fliehkraftgesteuert gegenseitig stabilisieren. Kern der Erfindung ist somit ein Schneidring, welcher sich bei einer Druckmesservergrößerung fliehkraftabhängig selbst verspannt und so einem sich bei einer Durchmesservergrößerung einstellenden Spiel zwischen den die Schneidelemente tragenden Trägerelemente entgegen wirkt. Bei der Verwendung derartiger Schneidringe lassen sich präzise arbeitenden Kreissägeblätter auch mit Stammblättern bilden, welche materialbedingt und/oder schnittgeschwindigkeitsbedingt im Betrieb eine Durchmesserzunahme aufweisen, welche auf den aus dem Stammblatt angeordneten Schneidring übertragen wird.

Vorteilhaft ist es dabei, dass jedes Trägerelement mindestens 3 Schneidelemente, insbesondere mindestens 5 Schneidelemente trägt, und im Wartungsfall die Austausch- und Handhabungsfunktion dadurch optimierbar ist. Die Trägerelemente können einfach mit der Post versandt werden, so dass keine Vor-Ort-Wartung erfolgen muss. Daneben ist der Montageaufwand jedoch erheblich reduziert, wenn die Trägerelemente eine Mehrzahl von Schneidelementen tragen.

Weiterhin sieht die Erfindung vor, jedes Trägerelement des Schneidrings mit einen ersten Kontaktabschnitt und einen zweiten Kontaktabschnitt auszustatten, wobei der erste Kontaktabschnitt eines der Trägerelemente bei komplettiertem Schneidring mit einem zweiten Kontaktabschnitt des voraus laufenden, benachbarten Trägerelements derart in direktem oder indirektem Kontakt steht, dass Druckkräfte übertragbar sind und wobei der zweite Kontaktabschnitt dieses Trägerelements bei komplettiertem Schneidring mit einem ersten Kontaktabschnitt des nach laufenden Trägerelements derart in direktem oder indirektem Kontakt steht, dass Druckkräfte übertragbar sind. Durch einen derartigen, ringförmig Druckverlauf wird der Schneidring in seiner geometrischen Form stabilisiert und es wird verhindert, dass die vorgesehene Schnittbreite durch mit Spiel im Schneidring befindliche Trägerelemente und deren Schneidelement überschritten wird.

Entsprechend der Erfindung ist es auch vorgesehen, den ersten Kontaktabschnitt und den zweiten Kontaktabschnitt jedes Trägerelements derart auszubilden, dass die benachbarten Kontaktabschnitte der Trägerelemente bei komplettiertem Schneidring zusammen jeweils eine Tasche ausbilden, wobei der eine Kontaktabschnitte insbesondere als Nut und wobei der andere Kontaktabschnitt insbesondere als Feder ausgebildet ist und wobei bei den benachbarten Trägerelementen bei komplettiertem Schneidring insbesondere jeweils die Nut durch die Feder abgedeckt ist. Derartige Abschnitte lassen sich fertigungstechnisch einfach herstellen, wobei bei einer Ausführung als Nut und Feder beim Ineinandergreifen von Nut und Feder als zusätzlicher Vorteil eine gegenseitige seitliche Führung zwischen benachbarten Trägerelementen gegeben ist.

Weiterhin sieht die Erfindung vor, den Schneidring mit einer der Anzahl der Trägerelemente entsprechenden Anzahl von Keilen auszustatten, wobei jeder Keil derart auf die Taschen angepasst ist, dass der Keil an Gleitflächen der Kontaktabschnitte der benachbarten Trägerelemente verschiebbar ist, wobei die Gleitflächen der Kontaktabschnitte mit zunehmendem Abstand von einer Drehachse des Schneidrings aufeinander zu laufen, so dass sich der Keil, welcher mit seiner Keilspitze in radialer Richtung nach außen weist, bei komplettiertem Schneidring im drehenden Betrieb des Schneidrings fliehkraftbedingt zwischen die Gleitflächen der benachbarten Trägerelemente drückt, wobei die Trägerelemente hierdurch im Betrieb des Schneidrings einen in Umfangsrichtung verspannten und in Umfangsrichtung spielfreien Kreisring bilden und unter Zwischenlage jeweils eines der Keile jeweils indirekt aneinander anliegen. Hierdurch wird mit einfachsten Mitteln eine fliehkraftgesteuerte Verspannung des Schneidrings realisiert, bei welcher als zusätzliches Bauteil jeweils nur eine Keil pro Trägerelement erforderlich ist.

Erfindungsgemäß weist der Keil zwischen einer an dem Nutboden der jeweiligen Nut anliegenden ersten Gleitfläche und einer an einer Stirnseite der jeweiligen Feder anliegenden zweiten Gleitfläche einen Keilwinkel (α) von 3° bis 30° und insbesondere zwischen 4° bis 15° auf. Hierdurch ist eine fliehkraftabhängige radiale Beweglichkeit des Keils nach innen und nach außen optimiert gewährleistet.

Entsprechend der Erfindung weist der Schneidring einen Durchmesser auf, welcher wenigstens 1 m und insbesondere wenigstens 3 m beträgt. Hierdurch ist der Schneidring genau für die Anwendungen geeignet, bei welchen vergleichsweise starke Durchmesserzunahmen im Betrieb auftreten.

Bei dem erfindungsgemäßen Kreissägeblatt, welches einen Schneidring und ein Stammblatt umfasst, liegt zwischen benachbarten Trägerelementen eine Verbindung vor, durch welche die benachbarten Trägerelemente sich bei hohen Schnittgeschwindigkeiten fliehkraftgesteuert gegenseitig stabilisieren und jedes Trägerelement mit dem Stammblatt derart verbunden ist, dass es an dem Stammblatt in radialer Richtung gesichert ist. Hierdurch ist ein Verbund zwischen dem Stammblatt und den Trägerelementen, welche die Schneidelemente tragen, gegeben, bei welchem sich das Stammblatt in seinem Durchmesser ausdehnen kann, ohne hierdurch durch die Trägerelemente behindert zu sein und bei welchem sich die Trägerelemente im Betrieb anforderungsgemäß und fliehkraftgesteuert stabilisieren.

In Bezug auf die Verbindung der Trägerelemente mit dem Stammblatt sieht die Erfindung vor, jedes Trägerelement mit wenigstens einem Sicherungsmittel mit dem Stammblatt zu verbinden, wobei das Sicherungsmittel einen Sicherungsstift umfasst, welcher sich von dem Trägerelement aus in radialer Richtung und orthogonal zu einer Drehachse des Kreissägerblatts durch eine das Trägerelement durchlaufende Durchgangsbohrung in eine radial in das Stammblatt hinein verlaufende Radialbohrung erstreckt, wobei der Sicherungsstift insbesondere als Sicherungsschraube ausgebildet ist, welche sich mit ihrem Gewinde in die Radialbohrung erstreckt. Hierdurch ist einen Anbindung des Trägerelements an das Stammblatt geschaffen, welche durch ihre radiale Orientierung bei einer Durchmesservergrößerung des Stammblatts keine Spannungen aufbaut und hierdurch auch nicht zu einer ungewünschten Verformung des Stammblatts führt.

Weiterhin sieht die Erfindung vor, das Sicherungsmittel zusätzlich mit einem Kontermittel, insbesondere einer Mutter auszustatten, welche vorzugsweise als Quermutterbolzen ausgebildet ist, wobei das Kontermittel in einer in dem Stammblatt ausgeführten Axialbohrung angeordnet ist, wobei die Axialbohrung parallel zu der Drehachse des Kreissägeblatts verläuft, wobei die Radialbohrung in die Axialbohrung mündet und wobei der Sicherungsstift zur Sicherung des Trägerelements an dem Stammblatt durch das Kontermittel fixiert ist. Mit derartigen Sicherungsmitteln lässt sich das Kreissägeblatt einfach und schnell zusammenbauen. Ebenso ist einfach und schnell der Austausch eines oder mehrere Trägerelemente möglich, da jeweils nur die Sicherungsstifte zu lösen sind.

Die Erfindung sieht auch vor, das Stammblatt mit wenigstens einem von einer Umfangsfläche aus radial verlaufenden Schlitz auszustatten, wobei das Stammblatt vorzugsweise eine der Anzahl der Trägerelemente entsprechende Anzahl von Schlitzen aufweist und wobei die Schlitze insbesondere gleichmäßig über den Umfang verteilt sind und wobei die Schlitze insbesondere dort an der Umfangsfläche beginnen, wo zwei benachbarte Trägerelemente aneinander grenzen. Durch derartige Schlitze werden Schwingungen gedämpft und wird ein Aufbau von Spannungen im Stammblatt bei der drehzahlbedingten Ausdehnung des Stammblatt reduziert.

Bezüglich einer Länge des bzw. der Schlitze sieht die Erfindung vor, diese mit wenigstens einem Sechstel eines Durchmessers des Stammblatts und mit höchstens einem Dritteln des Durchmessers des Stammblatts auszuführen. Bei einer derartigen Bemessung lässt sich bei allen Bauformen ein Optimum zwischen Schlitzwirkung und Schwächung des Stammblatts finden.

Die Erfindung sieht auch vor, das Stammblatt aus Kunststoff, insbesondere faserverstärktem Kunststoff oder einem Kunststofflaminat insbesondere aus faserverstärktem Kunststofflaminat zu bilden oder das Stammblatt aus Metall zu bilden oder das Stammblatt aus einem Sandwichmaterial aus unterschiedlichen Materialien wie insbesondere Metall und Kunststoff zu bilden. Die genannten Materialen sind allesamt geeignet, dünne Scheiben mit großem Durchmesser zu bilden, bei welchen ein Verhältnis von Durchmesser zu Dicke über 150 liegt. Durch entsprechend dünne Stärke des Stammblattes kann der Materialverlust beim Schneiden verringert, und können damit Kosten eingespart werden.

Schließlich sieht die Erfindung zwischen einer Unterseite der Trägerelemente und einer Umfangsfläche des Stammblatts einen Anlage mit wenigstens zwei Anlagekanten oder eine flächige Anlage vor. Hierdurch lässt sich unter Anwendung der Sicherungsmittel eine zuverlässige Verbindung zwischen den Trägerelementen und dem Stammblatt herstellen.

Eine bevorzugte Ausführungsform eines erfindungsgemäßen Kreissägeblattes wird entsprechend seines Durchmessers derart betrieben, dass eine Umfangsgeschwindigkeit von ca. 20m/s bis ca. 80m/s erreicht wird. Dieser Geschwindigkeitsbereich stellt bevorzugte Schneidgeschwindigkeiten für die genutzten Schneidelemente (Diamant) bereit. Je nach Durchmesser des Kreissägeblattes bewegen sich die Drehzahlen dabei zwischen 3500 Umdrehungen pro Minute bis zu 150 Umdrehungen pro Minute. Erfindungsgemäß werden dadurch die benötigten Fliehkräfte bereitgestellt.

Weitere Einzelheiten der Erfindung werden in der Zeichnung anhand von schematisch dargestellten Ausführungsbeispielen beschrieben.

Hierbei zeigt:
- Figur 1:: eine Seitenansicht einer ersten Ausführungsvariante eines erfindungsgemäßen Schneidrings, welcher zusammen mit einem Stammblatt eine erste Ausführungsvariante eines erfindungsgemäßen Kreissägeblatts bildet;
- Figur 2:: eine Seitenansicht eines der Schneidsegmente des in der Figur 1 gezeigten Schneidring, welches ein Trägerelement und neun Schneidelemente umfasst;
- Figur 3 und 4:: Ansichten der Außenkonturen des in der Figur 3 gezeigten Trägerelements in Bereich seiner beiden Kontaktabschnitte;
- Figur 5:: eine weitere Detailansicht der Figur 1;
- Figur 6:: eine schematische Detailansicht einer zweiten Ausführungsvariante eines erfindungsgemäßen Schneidrings bzw. Kreissägeblatts in Explosionsdarstellung;
- Figur 7:: eine Draufsicht auf die Darstellung der Figur 5;
- Figur 8:: eine schematische Seitenansicht benachbarter Kontaktabschnitte zweier Trägerelemente und eines Keils in Einbaustellung;
- Figur 9:: eine Draufsicht auf die Darstellung der Figur 8;
- Figur 10:: eine idealisierte Seitenansicht eines Kreissägeblatts bei still stehendem Kreissägblatt und
- Figuren 11 und 12:: eine idealisierte Seitenansicht des in der Figur 10 gezeigten Kreissägeblatts bei hoher Drehzahl, bei welcher das Kreissägeblatt bzw. das Stammblatt bzw. der Schneidring im Durchmesser vergrößert ist und der Keil in unterschiedlichen Stellungen steht.

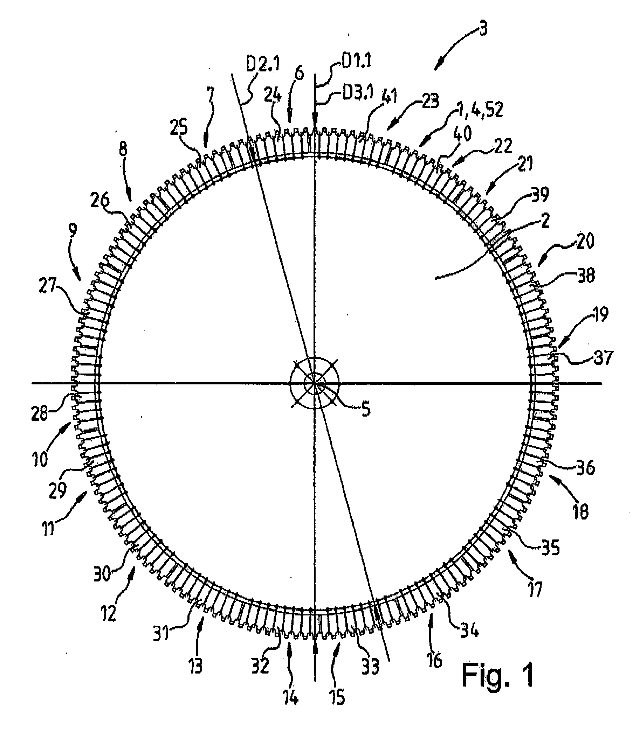

In der Figur 1 ist in Seitenansicht eine erste Ausführungsvariante eines erfindungsgemäßen Schneidrings 1 gezeigt. Dieser bildet zusammen mit einem Stammblatt 2 eine erste Ausführungsvariante eines erfindungsgemäßen Kreissägeblatts 3 und wird somit auch als Kreissägeblattschneidring 4 bezeichnet. Das Kreissägeblatt 3 umfasst im Wesentlichen den erwähnten Schneidring 1 und das erwähnte Stammblatt 2. Das Kreissägeblatt 3 bzw. der Schneidring 1 bzw. das Stammblatt 2 rotieren im Betrieb um eine Drehachse 5, welche sowohl die Drehachse des Kreissägeblatts 3 als auch die Drehachse des Schneidrings 1 als auch die Drehachse des Stammblatts 2 bildet. Hierbei weisen der Schneidring 1, das Stammblatt 2 und das Kreissägeblatt 3 bei still stehendem Kreissägeblatt 3 Durchmesser D1.1, D2.1 und D3.1 auf. Der Schneidring 1 setzt sich aus 18 Schneidsegmenten 6 bis 23 zusammen.

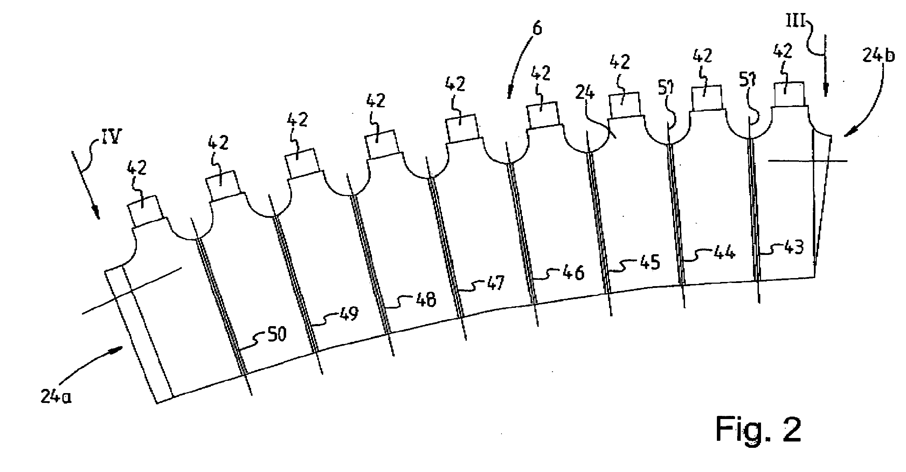

In der Figur 2 ist als Detail aus der Figur 1 eine Seitenansicht des Schneidsegments 6 des in der Figur 1 gezeigten Schneidrings 1 gezeigt. Das Schneidsegmente 6 umfasst wie jedes andere Schneidsegment 7 bis 23, ein Trägerelement 24 bzw. 25 bis 41 (siehe Figur 1) und neun Schneidelemente 42. Das Trägerelement 24 weist acht Durchgangsbohrungen 43 bis 50 auf, welche von schematisch dargestellten Sicherungsmitteln 51 durchlaufen werden. Die Durchgangsbohrungen 43 bis 50 sind in Bezug auf die Drehachse 5 (siehe Figur 1) so ausgerichtet, dass diese orthogonal zu dieser in radialer Richtung verlaufen, wobei die Durchgangsbohrungen 43 bis 50 zur besseren Erkennbarkeit mit durchgezogenen Linien dargestellt sind, obwohl diese in dem Trägerelement 24 verlaufen. Das Trägerelement 24 ist bogenförmig ausgebildet und bildet zusammen mit den anderen Trägerelementen 25 bis 41 (siehe Figur 1) einen geschlossenen Kreisring 52 (siehe Figur 1). Zu den benachbarten Trägerelementen 41 und 25 hin weist das Trägerelement 24 einen ersten Kontaktabschnitt 24a und einen zweiten Kontaktabschnitt 24b auf.

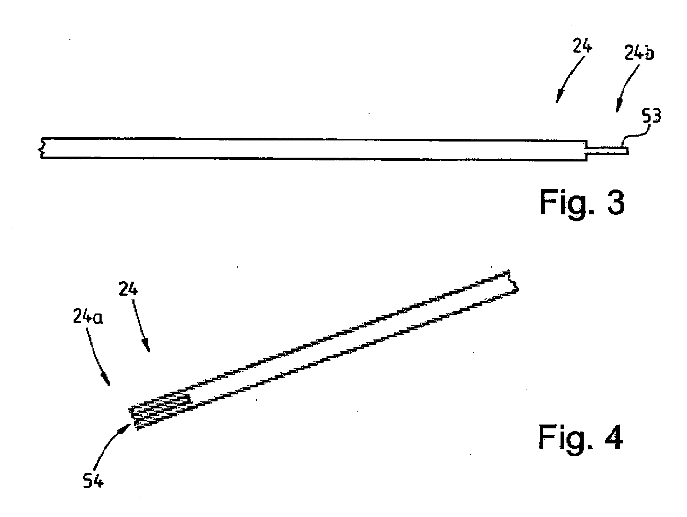

Der zweite Kontaktabschnitt 24b des Trägerelements 24 ist in der Figur 3 in Draufsicht entsprechend der in der Figur 2 angegebenen Pfeilrichtung III gezeigt, wobei zur Vereinfachung nur die Kontur des Trägerelements 24 dargestellt ist. Der zweite Kontaktabschnitt 24b bildet eine Feder 53.

Der erste Kontaktabschnitt 24a des Trägerelements 24 ist in der Figur 4 in Draufsicht entsprechend der in der Figur 2 angegebenen Pfeilrichtung IV gezeigt, wobei zur Vereinfachung nur die Kontur des Trägerelements 24 dargestellt ist. Der zweite Kontaktabschnitt 24b bildet eine Nut 54.

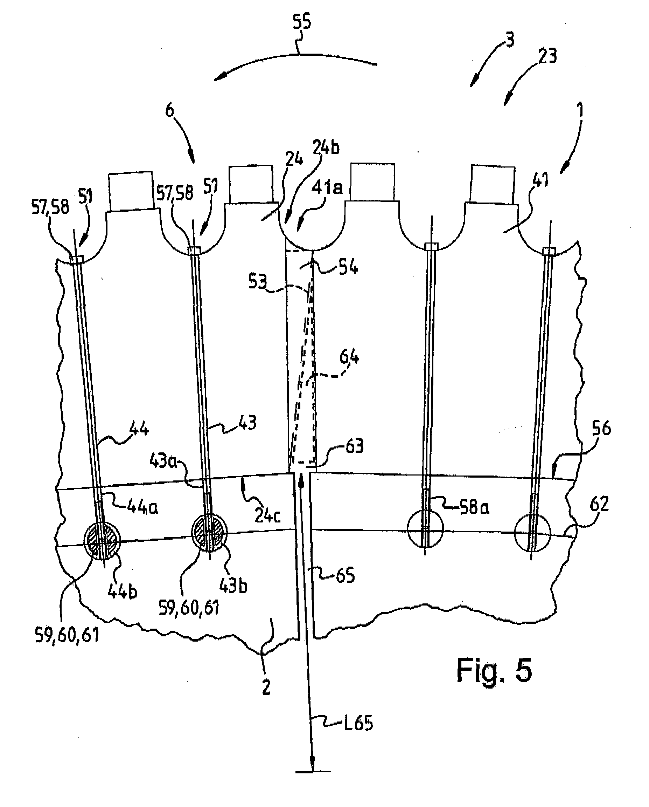

In der Figur 5 ist in einer vergrößerten Detailansicht der Figur 1 gezeigt wie das Trägerelement 24 bzw. Schneidsegment 6 mit dem in eine Drehrichtung 55 nacheilenden Trägerelement 41 bzw. Schneidsegment 23 zusammenwirkt. In dieser Darstellung ist in Ergänzung zu der Figur 2 auch vollständig erkennbar wie die Trägerelemente 24, 41 mit dem Stammblatt 2 verbunden sind. Die erwähnten Durchgangsbohrungen 43, 44 gehen direkt in Radialbohrungen 43a, 44a über, welche von einer Umfangsfläche 56 des Stammblatts 2 aus radial in das Stammblatt 2 hinein verlaufen. Hierbei münden die Radialbohrungen 43a, 44a jeweils in Axialbohrungen 43b, 44b, welche parallel zur Drehachse 5 (siehe Figur 1) ausgerichtet sind. Im vorliegenden Ausführungsbeispiel umfassen die Sicherungsmittel 51 Sicherungsstifte 57 in Form von Sicherungsschrauben 58 und Kontermittel 59 in Form von Muttern 60, welche als Quermutterbolzen 61 ausgeführt sind. Zur Fixierung des Trägerelements 24 werden die Sicherungsschrauben 58 mit ihren Gewinden in die in das Stammblatt 2 eingeschobenen Quermutterbolzen 61 eingedreht, so dass das Trägerelement 24 mit einer Unterseite 24c gegen die Umfangsfläche 56 des Stammblatts 2 gezogen wird. Die Axialbohrungen 43b, 44b liegen alle auf einem zu der Drehachse 5 (siehe Figur 1) konzentrischen Umkreis 62. In der Darstellung der Figur 5 ist ersichtlich wie der zweite Kontaktabschnitt 24b des Trägerelements 24 mit einem ersten Kontaktabschnitt 41a des Trägerelements 41 zusammenwirkt, wobei der erste Kontaktabschnitt 41a des Trägerelements 41 als Nut 54 ausgebildet ist, welche den als Feder 53 ausgebildeten zweiten Kontaktabschnitt 24b des Trägerelements 24 umgreift. Aus diesem Grund ist die in der Nut 54 verdeckt liegenden Feder 53 mit gestrichelten Linien dargestellt. Zwischen der Nut 54 und der Feder 53 entsteht als Freiraum bzw. Hohlraum eine Tasche 63, in welcher ein Keil 64 angeordnet ist, welcher zusammen mit weiteren siebzehn, nicht dargestellten Keilen Bestandteil des Schneidrings 1 bzw. des Kreissägeblatts 3 ist.

Abweichend von den Darstellungen der Figuren 1 bis 4 ist es vorgesehen, dass das Stammblatt 2 überall dort wo Schneidsegmente 6, 23 bzw. Trägerelemente 24, 41 aufeinander treffen Schlitze 65 aufweist. Die Schlitze 65 sind jeweils radial ausgerichtet und erstrecken sich von der Umfangsfläche 56 des Stammblatts 2 über eine Länge L65 in Richtung der Drehachse 5 (siehe Figur 1) des Stammblatts 2. Die Schlitze 65 sind jeweils in Fortsetzung der Taschen 63 angeordnet.

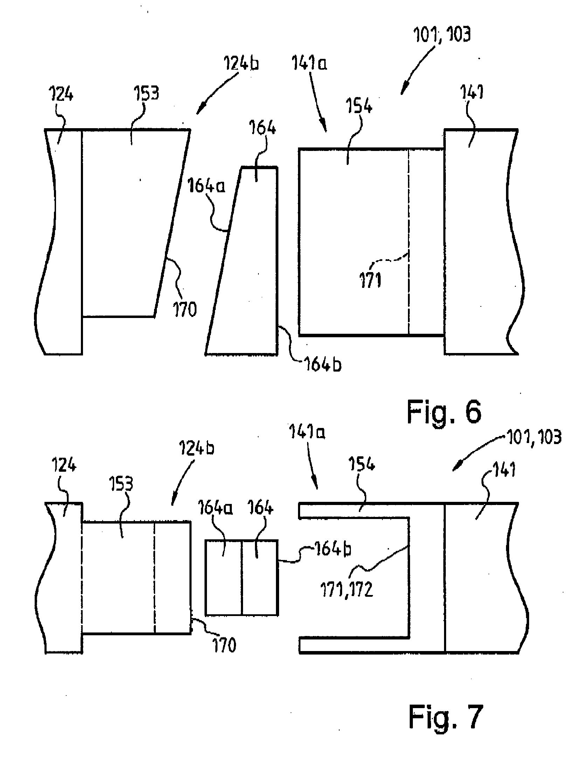

In den Figuren 6 bis 12 ist eine zweite Ausführungsvariante eines erfindungsgemaßen Schneidrings 101 bzw. Kreissägeblatts 103 in schematischen Darstellungen gezeigt. Die Figur 6 zeigt hierbei unter Weglassung der Darstellung eines Stammblatts eine Seitenansicht auf benachbarte Kontaktabschnitte 124b und 141a zweier Trägerelemente 124, 141 und einen Keil 164 in Explosionsdarstellung bzw. in einem unmontierten Zustand. In der Zusammenschau mit der Figur 7, welche die Darstellung der Figur 6 in Draufsicht zeigt, ist erkennbar, dass der Kontaktabschnitt 124b als Feder 153 ausgeführt ist und dass der Kontaktabschnitt 141a als Nut 154 ausgeführt ist. Hierbei weist der Kontaktabschnitt 124b eine dem Trägerelement 141 zugewandte Gleitfläche 170 auf und hierbei weist der Kontaktabschnitt 141a eine dem Trägerelemente 124 zugewandte Gleitfläche 171 auf. Die Gleitfläche 171 wird durch einen Nutboden 172 der Nut 154 gebildet. Der Keil 164 weist für einen Kontakt zu den Trägerelementen 124, 141 eine erste Gegengleitfläche 164a und eine zweite Gegengleitfläche 164b auf. Die Gleitfläche 170 ist an einer Stirnseite 173 der Feder 153 angeordnet.

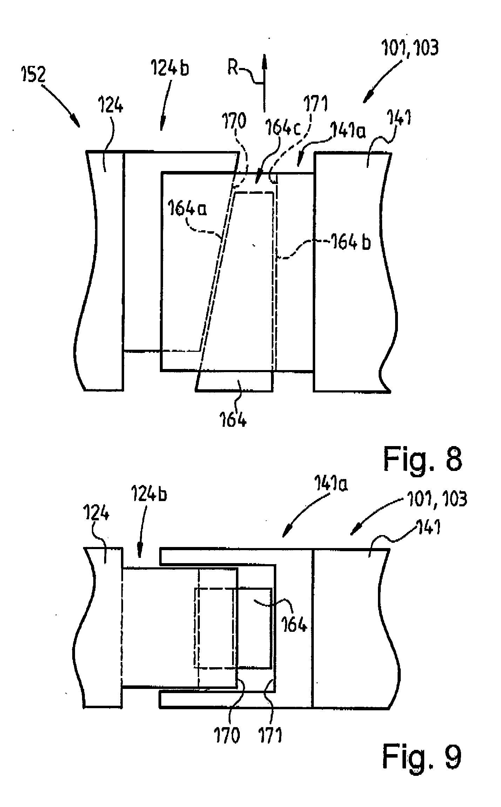

In den Figuren 8 und 9 ist analog zu den Figuren 6 und 7 weiterhin unter Weglassung der Darstellung des Stammblatts gezeigt, wie die beiden Trägerelemente 124 und 141 und der Keil 164 im montierten Zustand zusammenwirken, wobei zur weiteren Vereinfachung der schematischen Darstellung wie bereits bei den Figuren 6 und 7 auf eine bogenförmige Darstellung der Trägerelemente 124 und 141 verzichtet wurde. Im zusammengebauten Zustand weist der Keil 164 mit einer Keilspitze 164c in Bezug auf eine nicht dargestellte Drehachse des Schneidrings 101 bzw. des Kreissägeblatts 103 in eine Pfeilrichtung R radial nach außen und liegt mit seinen Gegengleitflächen 164a, 164b an den Gleitflächen 170, 171 der Kontaktabschnitte 124b, 141a an und ist so in einer durch die Nut 154 und die Feder 153 definierten Tasche 163 derart aufgenommen, dass in der dargestellten Stellung der Trägerelemente 124 und 141 keine weitere Bewegung des Keils 164 in die Pfeilrichtung R möglich ist und durch die abwechselnde Anordnung von Trägerelement und Keil ein stabiler geschlossener Kreisring 152 gebildet ist.

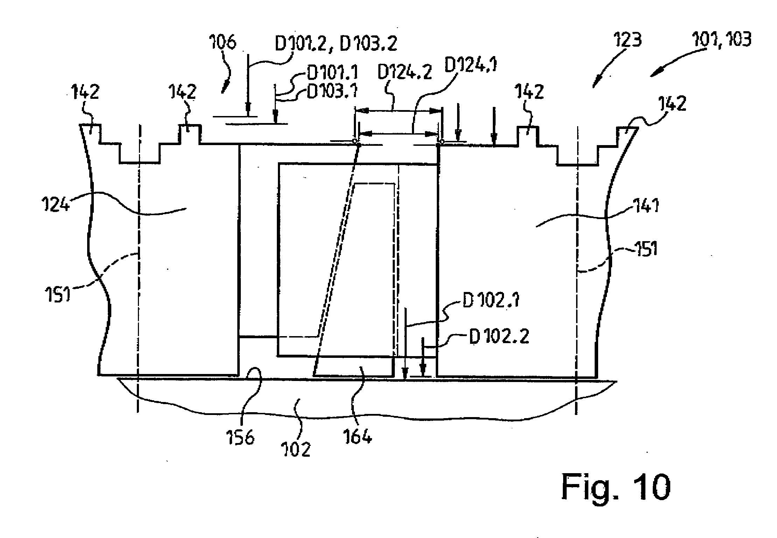

In der Figur 10 ist nun auf der Basis der Darstellung der Figur 8 schematisch die Situation gezeigt, welche sich bezüglich der Positionen der Trägerelemente 124, 141 und des Keils 164 zur Drehachse bei still stehendem bzw. langsam drehenden Schneidring 101 bzw. Kreissägeblatt 103 ergibt. Hierbei ist in der Figur 10 auch das bereits erwähnte Stammblatt 102 ausschnittsweise gezeigt. Weiterhin sind in der Figur 10 auch Schneidelemente 142 gezeigt, welche auf den Trägerelementen 124, 141 angeordnet sind und mit diesen Schneidsegmente 106, 123 bilden. Die Schneidsegmente 106, 123 bzw. Trägerelemente 124, 141 sind mit Sicherungsmitteln 151 mit dem Stammblatt 102 verbunden wie dies auch zu der in den Figuren 1 bis 5 gezeigten Ausführungsvariante beschrieben ist. Im still stehenden bzw. langsam drehenden Betrieb weist das Stammblatt 102 einen Durchmesser D102.1 und das Kreissägeblatt 103 einen Durchmesser D103.1 bzw. der Schneidring 101 einen Durchmesser D101.1 auf. Entsprechend weisen die Trägerelemente 124, 141 einen Abstand D124.1 zueinander auf. Bei hohen Drehzahlen dehnt sich das Stammblatt 102 aus, so dass sich dessen Durchmesser auf D102.2 vergrößert. Entsprechend nimmt dann auch der Durchmesser des Schneidrings 101 bzw. des Kreissägeblatts 103 auf D101.2 bzw. D103.2 zu, da die Schneidsegmente 106, 123 von einer Umfangsfläche 156 des Stammblatts 102 getragen werden. Diese Durchmesserzunahme bewirkt auch, dass sich die Trägerelemente 124, 141 voneinander entfernen und dann einen Abstand D124.2 aufweisen, welcher größer ist als der bei Stillstand bzw. langsamer Bewegung gemessene Abstand D124.1.

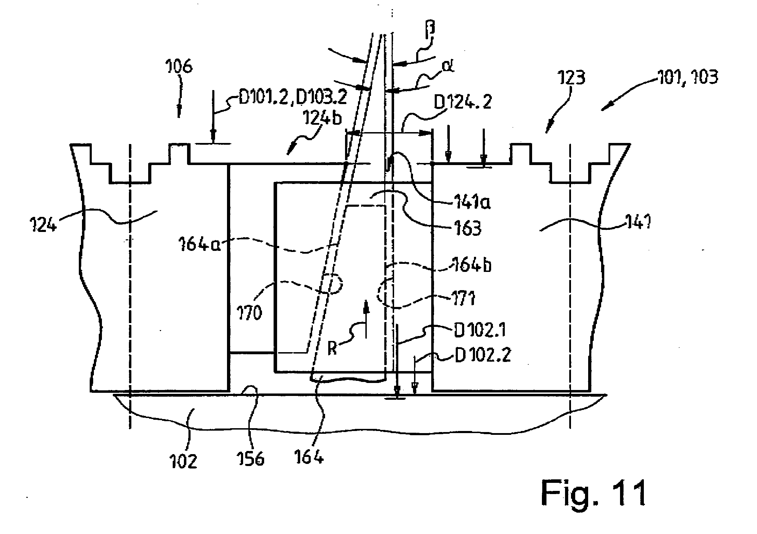

In der Figur 11 ist der oben beschriebene Zustand dargestellt, welcher sich bei hohen Drehzahlen einstellt, wobei der Keil 164 zum leichteren Verständnis in der Figur 11 noch in der Stellung gezeigt ist, welche dieser bei Stillstand bzw. bei langsam drehenden Betrieb einnimmt. Hierdurch wird deutlich, wie sich auch die Tasche 163 bei hoher Drehzahl vergrößert bzw. verbreitert. Fliehkraftbedingt bzw. fliehkraftgesteuert wandert der Keil 164 bei zunehmender Drehzahl in die radiale Richtung R nach außen von der Drehachse weg und drückt mit seinen Gegengleitflächen 164a und 164b gegen die Gleitfläche 170, 171 der Kontaktabschnitte 124b und 141a, so dass die benachbarten Trägerelemente 124, 141 bzw. Schneidsegmente 106, 123 miteinander verspannt werden und sich hierdurch gegenseitig stabilisieren. Der Schneidring 101 bzw. das Kreissägeblatt 103 sind so ausgeführt, dass sich die benachbarten Trägerelemente bei hohen Schnittgeschwindigkeiten durch jeweils zwischen den benachbarten Trägerelementen angeordnete fliehkraftgesteuert arbeitende Keile gegenseitig stabilisieren.

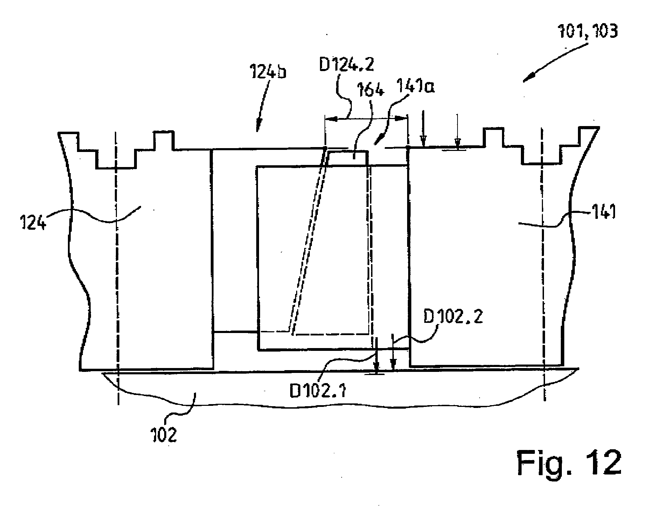

In der Figur 12 ist der Keil 164 in der beschriebenen Position gezeigt, welche dieser bei hoher Drehzahl des Schneidrings 101 bzw. des Kreissägeblatts 103 einnimmt. Bei abnehmender Drehzahl und im Durchmesser schrumpfendem Stammblatt 102 wird der Keil 164 von den Kontaktabschnitten 124b und 141a wieder in die in der Figur 10 gezeigt Stellung in Richtung der Drehachse zurück geschoben, so dass sich die Trägerelemente 124, 141 wieder einander annähern können. Über einen Keilwinkel α (siehe Figur 11), in welchem die Gegengleitflächen 164a und 164b des Keils 164 zueinander stehen, und/oder über ein Gewicht des Keils 164 lässt sich die Wirkungsintensität des Keils 164 steuern. Hierbei sieht die Erfindung vor, die Gleitflächen 170, 171 der Kontaktabschnitte 124b und 141a mit einem Gleitflächenwinkel β (siehe Figur 11) zueinander zu orientierten, welcher dem Keilwinkel α entspricht. Insbesondere sieht die Erfindung auch vor, dass eine der Gegengleitflächen 164a, 164b und eine der Gleitflächen 170, 171 in Richtung einer Radialen verläuft.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1, 101: Schneidring
- 2, 102: Stammblatt
- 3, 103: Kreissägeblatt
- 4: Kreissägeblattschneidring
- 5: Drehachse
- 6 - 23: Schneidsegment
- 106, 123: Schneidsegment
- 24, 25 - 41: Trägerelement
- 124, 141: Trägerelement
- 24a: erster Kontaktabschnitt von 24
- 24b, 124b: zweiter Kontaktabschnitt von 24 bzw. 124
- 24c: Unterseite von 24
- 41a, 141a: erster Kontaktabschnitt von 41 bzw. 141
- 42, 142: Schneidelement
- 43 - 50: Durchgangsbohrung
- 43a, 44a: Radialbohrung
- 43b, 44b: Axialbohrung
- 51, 151: Sicherungsmittell
- 52, 152: geschlossener Kreisring
- 53, 153: Feder
- 54, 154: Nut
- 55: Drehrichtung
- 56, 156: Umfangsfläche
- 57: Sicherungsstift
- 58: Sicherungsschraube
- 58a: Gewinde von 58
- 59: Kontermittel 59
- 60: Mutter
- 61: Quermutterbolzen
- 62: konzentrischer Umkreis
- 63, 163: Tasche 63
- 64, 164: Keil 64
- 164a, 164b: Gegengleitfläche
- 164c: Keilspitze
- 65: Schlitz in 2
- 170: Gleitfläche an 124b
- 171: Gleitfläche an 141a
- 172: Nutboden von 154
- 173: Stirnseite von 153

- α: Keilwinkel
- β: Gleitflächenwinkel
- D1.1 - D2.1: Durchmesser von 1 - 3
- D101.1 - D103.1: Durchmesser von 101 - 103
- D101.2 - D103.2: Durchmesser von 101 - 103
- D124.1, D124.2: Abstand der Trägerelemente
- L65: Länge von 65
- R: radiale Richtung

## Patentansprüche

1. Schneidring (1; 101) zur Bildung eines Kreissägeblattes (3; 103) zusammen mit einem Stammblatt (2; 102), insbesondere Kreissägeblattschneidring (4), umfassend mehrere Trägerelemente (24 - 41; 124, 141) und eine Vielzahl von Schneidelementen (42; 142), wobei jedes Trägerelement (24 - 41; 124, 141) jeweils mehrere der Schneidelemente (42; 142) trägt, **dadurch gekennzeichnet, dass** jedes Trägerelement (24 - 41; 124, 141) mit seinem benachbarten Trägerelement (24 - 41; 124, 141) derart verbunden ist, dass sich die benachbarten Trägerelemente (24 - 41; 124, 141) bei hohen Schnittgeschwindigkeiten fliehkraftgesteuert gegenseitig stabilisieren.

2. Schneidring nach Anspruch 1, **dadurch gekennzeichnet, dass** jedes Trägerelement (24 - 41; 124, 141) einen ersten Kontaktabschnitt (41a; 24a; 141a) und einen zweiten Kontaktabschnitt (24b; 124b) umfasst, wobei der erste Kontaktabschnitt (24a; 41a; 141a) eines der Trägerelemente (24 - 41; 124, 141) bei komplettiertem Schneidring (1; 101) mit einem Kontaktabschnitt des voraus laufenden, benachbarten Trägerelements (24 - 41; 124, 141) derart in direktem oder indirektem Kontakt steht, dass Druckkräfte übertragbar sind und wobei der zweite Kontaktabschnitt (24b; 124b) dieses Trägerelements (24 - 41; 124, 141) bei komplettiertem Schneidring (1; 101) mit einem Kontaktabschnitt (41a; 141a) des nach laufenden Trägerelements (24 - 41; 124, 141) derart in direktem oder indirektem Kontakt steht, dass Druckkräfte übertragbar sind.

3. Schneidring nach einem der vorhergehenden Ansprüche, **dadurch gekennzeichnet, dass** der erste Kontaktabschnitt (24a; 41a; 141a) und der zweite Kontaktabschnitt (24b; 124b) jedes Trägerelements (24 - 41; 124, 141) derart ausgebildet sind, dass die benachbarten-Kontaktabschnitte (24b, 41a; 124b, 141a) der Trägerelemente (24 - 41; 124, 141) bei komplettiertem Schneidring (1; 101) zusammen jeweils eine Tasche (63; 163) ausbilden, wobei der eine Kontaktabschnitte (24a; 41a; 141a) insbesondere als Nut (54; 154) und wobei der andere Kontaktabschnitt (24b; 124b) insbesondere als Feder (53; 153) ausgebildet ist und wobei bei den benachbarten Trägerelementen (24 - 41; 124, 141) bei komplettiertem Schneidring (1; 101) insbesondere jeweils die Nut (54; 154) durch die Feder (53; 153) abgedeckt ist.

4. Schneidring nach Anspruch 3, **dadurch gekennzeichnet, dass** der Schneidring (1; 101) eine der Anzahl der Trägerelemente (24 - 41; 124, 141) entsprechende Anzahl von Keilen (64; 164) umfasst, wobei jeder Keil (64; 164) derart auf die Taschen (63, 163) angepasst ist, dass der Keil (64; 164) an Gleitflächen (170, 171) der Kontaktabschnitte (24a; 24b; 41a; 124b; 141a) der benachbarten Trägerelemente (24 - 41; 124, 141) verschiebbar ist, wobei die Gleitflächen (170, 171) der Kontaktabschnitte (24a; 24b; 41a; 124b; 141a) mit zunehmendem Abstand von einer Drehachse (5) des Schneidrings (1; 101) aufeinander zu laufen, so dass sich der Keil (64; 164), welcher mit seiner Keilspitze (164c) in radialer Richtung nach außen weist, bei komplettiertem Schneidring (1; 101) im drehenden Betrieb des Schneidrings (1; 101) fliehkraftbedingt zwischen die Gleitflächen (170, 171) der benachbarten Trägerelemente (24 - 41; 124, 141) drückt, wobei die Trägerelemente (24 - 41; 124, 141) hierdurch im Betrieb des Schneidrings (1; 101) einen in Umfangsrichtung verspannten und in Umfangsrichtung spielfreien Kreisring (52, 152) bilden und unter Zwischenlage jeweils eines der Keile (64; 164) jeweils indirekt aneinander anliegen.

5. Schneidring nach Anspruch 4, **dadurch gekennzeichnet, dass** der Keil (64; 164) zwischen einer an dem Nutboden (172) der jeweiligen Nut (54; 154) anliegenden ersten Gleitfläche (171) und einer an einer Stirnseite (173) der jeweiligen Feder (53; 153) anliegenden zweiten Gleitfläche (170) einen Keilwinkel (α) von 3° bis 30° und insbesondere zwischen 4° bis 15° aufweist.

6. Schneidring nach wenigstens einem der vorhergehenden Ansprüche, **dadurch gekennzeichnet, dass** der Schneidring (1; 101) einen Durchmesser (D1.1; D101.1) aufweist, welcher wenigstens 1 m und insbesondere wenigstens 3 m beträgt.

7. Kreissägeblatt umfassend einen Schneidring entsprechend dem Oberbegriff des Anspruchs 1 und ein Stammblatt (2; 102), **dadurch gekennzeichnet, dass** der Schneidring (1; 101) entsprechend dem Kennzeichen des Anspruchs 1 ausgeführt ist und dass jedes Trägerelement (24 - 41; 124, 141) mit dem Stammblatt (2; 102) derart verbunden ist, dass es an dem Stammblatt (2; 102) in radialer Richtung gesichert ist.

8. Kreissägeblatt nach Anspruch 7, **dadurch gekennzeichnet, dass** jedes Trägerelement (24 - 41; 124, 141) mit wenigstens einem Sicherungsmittel (51; 151) mit dem Stammblatt (2; 102) verbunden ist, wobei das Sicherungsmittel (51; 151) einen Sicherungsstift (57) umfasst, welcher sich von dem Trägerelement (24 - 41; 124, 141) aus in radialer Richtung und orthogonal zu einer Drehachse (5) des Kreissägerblatts (3; 103) durch eine das Trägerelement (24 - 41; 124, 141) durchlaufende Durchgangsbohrung (43 - 50) in eine radial in das Stammblatt (2; 102) hinein verlaufende Radialbohrung (43a, 44a) erstreckt, wobei der Sicherungsstift (57) insbesondere als Sicherungsschraube (58) ausgebildet ist, welche sich mit ihrem Gewinde (58a) in die Radialbohrung (43a, 44a) erstreckt.

9. Kreissägerblatt nach Anspruch 8, **dadurch gekennzeichnet**, - dass das Sicherungsmittel (51; 151) zusätzlich ein Kontermittel (59), insbesondere eine Mutter (60) umfasst, welche vorzugsweise als Quermutterbolzen (61) ausgebildet ist,
- wobei das Kontermittel (59) in einer in dem Stammblatt (2; 102) ausgeführten Axialbohrung (43b, 44b) angeordnet ist,
- wobei die Axialbohrung (43b, 44b) parallel zu der Drehachse (5) des Kreissägeblatts (3; 103) verläuft,
- wobei die Radialbohrung (43a, 44a) in die Axialbohrung (43b, 44b) mündet und
- wobei der Sicherungsstift (57) zur Sicherung des Trägerelements (24 - 51; 124, 141) an dem Stammblatt (2; 102) durch das Kontermittel (59) fixiert ist.

10. Kreissägeblatt nach wenigstens einem der Ansprüche 7 bis 9, **dadurch gekennzeichnet, dass** das Stammblatt (2; 102) wenigstens einen von einer Umfangsfläche (56; 156) aus radial verlaufenden Schlitz (65) aufweist, wobei das Stammblatt (2; 102) vorzugsweise eine der Anzahl der Trägerelemente (24 - 41; 124, 141) entsprechende Anzahl von Schlitzen (65) aufweist und wobei die Schlitze (65) insbesondere gleichmäßig über den Umfang verteilt sind und wobei die Schlitze (65) insbesondere dort an der Umfangsfläche (56; 156) beginnen, wo zwei benachbarte Trägerelemente (24 - 41; 124, 141) aneinander grenzen.

11. Kreissägeblatt nach Anspruch 10, **dadurch gekennzeichnet, dass** der Schlitz (65) eine Länge (L65) aufweist, welche wenigstens einem Sechstel eines Durchmessers (D102.1) des Stammblatts (2) entspricht und welche höchstens einem Drittel des Durchmessers (D102.1) des Stammblatts (2) entspricht.

12. Kreissägeblatt nach wenigstens einem der vorhergehenden Ansprüche 7 bis 11, **dadurch gekennzeichnet,**
- **dass** das Stammblatt (2; 102) aus Kunststoff, insbesondere faserverstärktem Kunststoff oder einem Kunststofflaminat insbesondere aus faserverstärktem Kunststofflaminat gebildet ist oder
- **dass** das Stammblatt (2; 102) aus Metall gebildet ist oder
- **dass** das Stammblatt (2; 102) aus einem Sandwichmaterial aus unterschiedlichen Materialien wie insbesondere Metall und Kunststoff gebildet ist.

13. Kreissägeblatt nach wenigstens einem der vorhergehenden Ansprüche 7 bis 12, **dadurch gekennzeichnet, dass** die das Trägerelemente (24 - 41; 124, 141) mit ihren Unterseiten (24c) jeweils mit wenigstens zwei Anlagekanten oder mit flächiger Anlage an einer Umfangsfläche (56; 156) des Stammblattes (2; 102) anliegen.
